# EUROPÄISCHE PATENTANMELDUNG

(11) **EP 4 793 861 A1**
(43) Veröffentlichungstag der Anmeldung: **19.08.2026**
(21) Anmeldenummer: 26154038.9
(22) Anmeldetag: 26.01.2026
(51) Int. Cl.: G06Q 30/018, G06Q 50/18, G06Q 50/26

(54) **VERFAHREN UND EINE VORRICHTUNG ZUR ERKENNUNG EINER PRODUKTNACHAHMUNG**

(30) Priorität: 14.02.2025 DE 102025105551
(71) Anmelder: FORBENCAP GmbH, 87527 Sonthofen (DE)
(72) Erfinder: Conle, Robert Ludwig, 87527 Sonthofen (DE)
(74) Vertreter: advotec.

(57) **Zusammenfassung**

Vorrichtung (100) zur Erkennung einer Produktnachahmung (106) auf einer Online-Handelsplattform (108), wobei die Vorrichtung (100) eine Recheneinrichtung (102) aufweist, die dazu ausgebildet ist, die folgenden Schritte auszuführen: Bereitstellen von Produktinformationen (110) zu einem Produkt (112), wobei die Produktinformationen Bilddaten (114) und/oder Videodaten, Textdaten (116) und/oder numerische Daten (118) und/oder Audiodaten aufweisen; Durchführen einer automatisierten Suche auf der Online-Handelsplattform (108) nach einer potenziellen Produktnachahmung (106) mittels eines ersten maschinellen Lemmodells (120) unter Verwendung der bereitgestellten Produktinformationen (110); Validieren der potenziellen Produktnachahmung (106) auf Basis einer vorbestimmten, priorisierten Produktinformation (114, 116, 118) der bereitgestellten Produktinformationen (110) zum Ermitteln einer tatsächlichen Produktnachahmung (122); und Erzeugen einer Ausgabedatei (124) zu der tatsächlichen Produktnachahmung (122) unter Verwendung von Informationen (126) zu der tatsächlichen Produktnachahmung (122) und der bereitgestellten Produktinformationen (110) durch ein zweites maschinelles Lernmodell (123).

## Beschreibung

Die Erfindung betrifft ein Verfahren und eine Vorrichtung zur automatisierten Erkennung einer Produktnachahmung auf einer Online-Handelsplattform. Ferner betrifft die Erfindung ein Computerprogrammprodukt und einen computerlesbaren Datenträger.

### Stand der Technik

Mit der zunehmenden Verlagerung des Handels in den Online-Bereich steigt die Verbreitung von Produktnachahmungen auf digitalen Marktplätzen erheblich an. Unternehmen sehen sich mit der Herausforderung konfrontiert, gefälschte Produkte, die ihre Schutzrechte verletzen, auf globalen Plattformen zu identifizieren und dagegen vorzugehen. Die manuelle Überwachung solcher Plattformen ist aufgrund der schieren Anzahl von Angeboten und der schnellen Anpassungsfähigkeit der Anbieter von Nachahmungen ineffizient und ressourcenintensiv.

Bisherige Lösungen zur Bekämpfung von Produktnachahmungen umfassen vorwiegend manuelle Recherchen, die durch einfache Suchalgorithmen oder visuelle Vergleiche unterstützt werden. Diese Methoden sind jedoch zeitaufwendig und stoßen an ihre Grenzen, insbesondere bei der Identifikation von leicht abgewandelten Designs oder bei der Auswertung großer Datenmengen. Einige Systeme nutzen regelbasierte Verfahren oder Mustervergleiche, die jedoch in ihrer Präzision und Skalierbarkeit eingeschränkt sind.

Darüber hinaus bieten verschiedene Plattformen und Behörden Mechanismen zur Meldung von Fälschungen, wobei der Nachweis und die Durchsetzung von Schutzrechten oft mit erheblichem bürokratischem Aufwand verbunden sind.

Es ist eine Aufgabe der Erfindung, ein dahingehend verbessertes Verfahren und/oder eine dahingehend verbesserte Vorrichtung anzugeben.

### Offenbarung der Erfindung

Die Aufgabe wird gelöst durch ein Verfahren gemäß den Merkmalen des Patentanspruchs 1. Die Aufgabe wird gelöst durch eine Vorrichtung gemäß den Merkmalen des Patentanspruchs 15.

Gemäß einem bevorzugten Aspekt wird ein Verfahren zur automatisierten Erkennung einer Produktnachahmung auf einer Online-Handelsplattform bereitgestellt, wobei das Verfahren die folgenden Schritte umfasst: Bereitstellen von Produktinformationen zu einem Produkt, wobei die Produktinformationen Bilddaten und/oder Videodaten, Textdaten, insbesondere eine Produktbeschreibung und/oder schutzrechtliche Daten zu dem Produkt, und/oder numerische Daten und/oder Audiodaten aufweisen; Durchführen einer automatisierten Suche auf der Online-Handelsplattform nach einer potenziellen Produktnachahmung mittels eines ersten maschinellen Lernmodells unter Verwendung der bereitgestellten Produktinformationen; Validieren der potenziellen Produktnachahmung auf Basis einer vorbestimmten, priorisierten Produktinformation der bereitgestellten Produktinformationen zum Ermitteln einer tatsächlichen Produktnachahmung; und Erzeugen einer Ausgabedatei zu der tatsächlichen Produktnachahmung unter Verwendung von Informationen zu der tatsächlichen Produktnachahmung und der bereitgestellten Produktinformationen durch ein zweites maschinelles Lernmodell.

Es versteht sich, dass die erfindungsgemäßen Schritte sowie weitere optionale Schritte nicht notwendigerweise in der aufgezeigten Reihenfolge ausgeführt werden müssen, sondern auch in einer anderen Reihenfolge ausgeführt werden können. Ferner können weitere Zwischenschritte vorgesehen sein. Die einzelnen Schritte können zudem einen oder mehrere Unterschritte umfassen, ohne dass hierdurch der Umfang des erfindungsgemäßen Verfahrens verlassen wird.

Gemäß einem weiteren bevorzugten Aspekt wird eine Vorrichtung zur Erkennung einer Produktnachahmung auf einer Online-Handelsplattform bereitgestellt, wobei die Vorrichtung eine Recheneinrichtung, insbesondere implementiert in einem Server- oder Cloudservice, aufweist, die dazu ausgebildet ist, die folgenden Schritte auszuführen. Zunächst erfolgt das Bereitstellen von Produktinformationen zu einem Produkt, wobei die Produktinformationen Bilddaten und/oder Videodaten, Textdaten, insbesondere eine Produktbeschreibung und/oder schutzrechtliche Daten zu dem Produkt, und/oder numerische Daten und/oder Audiodaten aufweisen. Anschließend wird eine automatisierte Suche auf der Online-Handelsplattform nach einer potenziellen Produktnachahmung durchgeführt, wobei die Suche mittels eines ersten maschinellen Lernmodells unter Verwendung der bereitgestellten Produktinformationen erfolgt. Danach erfolgt das Validieren der potenziellen Produktnachahmung auf Basis einer vorbestimmten, priorisierten Produktinformation der bereitgestellten Produktinformationen zum Ermitteln einer tatsächlichen Produktnachahmung. Abschließend wird eine Ausgabedatei zu der tatsächlichen Produktnachahmung erzeugt, wobei die Ausgabedatei unter Verwendung von Informationen zu der tatsächlichen Produktnachahmung und der bereitgestellten Produktinformationen vorzugsweise durch ein zweites maschinelles Lernmodell erstellt wird.

Die Recheneinrichtung kann hardwaretechnisch und/oder softwaretechnisch implementiert sein. Bei einer hardwaretechnischen Implementierung kann die Recheneinrichtung zum Beispiel als Computer oder als Mikroprozessor ausgebildet sein. Bei einer softwaretechnischen Implementierung kann die Recheneinrichtung als Computerprogrammprodukt, als eine Funktion, als eine Routine, als ein Algorithmus, als Teil eines Programmcodes oder als ausführbares Objekt ausgebildet sein. Ferner kann die Recheneinrichtung auch als Teil eines übergeordneten Steuerungssystems, wie einem Server- oder Cloudservice, sein.

Die für das Verfahren gemachten Ausführungen gelten für die Vorrichtung entsprechend. Dabei versteht es sich, dass sprachliche Abwandlungen von verfahrensmäßig formulierten Merkmalen nach sprachüblicher Praxis für die Vorrichtung umformulierbar sind, ohne dass derartige Formulierungen explizit hier aufgeführt werden müssen.

Eine Produktnachahmung bezeichnet vorzugsweise ein Produkt, das in wesentlichen Merkmalen einem bereits existierenden geschützten Produkt ähnelt oder dieses imitiert, wodurch es zu einer potenziellen Verletzung bestehender Schutzrechte wie Patentschutz, Designschutz, Markenschutz, insbesondere bei 3D-Marken, oder Gebrauchsmusterschutz oder des Urheberrechtsschutzes kommen kann.

Eine Online-Handelsplattform umfasst vorzugsweise eine digitale Plattform, auf der Produkte zum Verkauf angeboten werden, wobei diese Plattformen verschiedene Formate an Produktinformationen wie Bilddaten, Videodaten, Textdaten, numerische Daten und Audiodaten unterstützen und sowohl von privaten als auch gewerblichen Anbietern genutzt werden können.

Produktinformationen umfassen vorzugsweise Bilddaten in Form von 360°-Ansichten oder verschiedenen Perspektiven, die auch das "Innenleben" eines Produkts darstellen können, und/oder Videodaten, die das Produkt in der Anwendung zeigen, um Funktionsweisen und Eigenschaften zu veranschaulichen. Des Weiteren können Produktinformationen vorzugsweise Textdaten enthalten, die sich auf Produktbeschreibungen, Funktionsbeschreibungen und/oder geltende Standards beziehen, insbesondere technische Normen, Zertifizierungen und/oder branchenspezifische Anforderungen. Schutzrechtliche Daten umfassen vorzugsweise Informationen zu bestehenden Schutzrechten wie Patentschutz, Designschutz, Markenschutz, insbesondere 3D-Marken, und Gebrauchsmusterschutz. Numerische Daten umfassen vorzugsweise Angaben zu Preis, Dimensionen und/oder weiteren quantitativen Parametern des Produkts, während Audiodaten vorzugsweise Töne oder Klänge des Produkts umfassen, insbesondere wenn diese Klänge geschützt sind oder darüber eine eindeutige Identifikation des Produkts ermöglichen.

Die automatisierte Suche auf der Online-Handelsplattform erfolgt vorzugsweise unter Nutzung eines ersten maschinellen Lernmodells, das anhand der bereitgestellten Produktinformationen trainiert wurde, um potenzielle Übereinstimmungen oder Ähnlichkeiten mit bestehenden Angeboten auf der Plattform zu erkennen. Dabei werden vorzugsweise sowohl visuelle als auch textuelle Merkmale analysiert, um eine möglichst präzise Identifikation potenzieller Produktnachahmungen zu gewährleisten.

Das Validieren der potenziellen Produktnachahmung erfolgt vorzugsweise auf Basis einer vorbestimmten, priorisierten Produktinformation, die eine festgelegte Hierarchie oder Gewichtung einzelner Produktmerkmale umfassen kann, um eine Entscheidung darüber zu treffen, ob es sich tatsächlich um eine Nachahmung handelt. Diese priorisierten Produktinformationen umfassen vorzugsweise Merkmale wie das visuelle Erscheinungsbild, textliche Übereinstimmungen, numerische Abweichungen und/oder geschützte Audiodaten.

Die Ausgabedatei umfasst vorzugsweise alle relevanten Informationen zu der tatsächlichen Produktnachahmung, einschließlich Details zur Übereinstimmung, Anbieterinformationen und/oder eine Zusammenfassung der ermittelten Verstöße, die für rechtliche Schritte und/oder weitere Maßnahmen genutzt werden können.

Das erste maschinelle Lernmodell ist vorzugsweise als tiefes neuronales Netzwerk ausgebildet, das verschiedene Eingabearten wie Bild-, Text- und numerische Daten verarbeiten kann, um Ähnlichkeitsanalysen durchzuführen. Dieses Modell kann vorzugsweise auf großen Datenmengen trainiert werden, die sowohl originale als auch nachgeahmte Produkte enthalten, um Muster zu erkennen und präzise Vorhersagen zu ermöglichen.

Das erste maschinelle Lernmodell umfasst vorzugsweise ein Convolutional Neural Network (CNN) zur Verarbeitung von Bilddaten, das insbesondere für die Erkennung von Mustern, Formen und Texturen in Produktbildern geeignet ist. Für die Bearbeitung von Videodaten kann vorzugsweise ein Long Short-Term Memory (LSTM)-Netzwerk oder ein 3D-CNN eingesetzt werden, um zeitliche Abfolgen und Bewegungen innerhalb der Videodaten zu analysieren. Zur Verarbeitung von Textdaten wird vorzugsweise ein Transformerbasiertes Modell wie BERT (Bidirectional Encoder Representations from Transformers) oder GPT (Generative Pre-trained Transformer) verwendet, das in der Lage ist, komplexe sprachliche Zusammenhänge und produktbezogene Begriffe zu erfassen. Numerische Daten können vorzugsweise durch Gradient Boosting Machines (GBM), Random Forest oder Deep Neural Networks (DNN) analysiert werden, um Muster, Anomalien oder Zusammenhänge in strukturierten Daten zu identifizieren. Für die Verarbeitung von Audiodaten eignet sich vorzugsweise ein Recurrent Neural Network (RNN) oder ein WaveNet-Modell, das akustische Merkmale analysieren und wiederkehrende Muster erkennen kann. Diese Modelle können einzeln oder in Kombination als multimodales maschinelles Lernmodell eingesetzt werden, um eine umfassende und genaue Analyse der verschiedenen Datenformate zu ermöglichen.

Das zweite maschinelle Lernmodell ist vorzugsweise darauf ausgelegt, die durch das erste Modell identifizierten potenziellen Nachahmungen weiter zu verarbeiten und zu bewerten, indem es eine detailliertere Analyse unter Berücksichtigung zusätzlicher Faktoren wie juristischer Aspekte oder historischer Fälle durchführt. Vorzugsweise kann es sich bei dem ersten und zweiten maschinellen Lernmodell um ein und dasselbe Modell handeln, insbesondere wenn ein multimodales Modell eingesetzt wird, das sowohl Bild-, Text- als auch numerische Daten in einem gemeinsamen Modell verarbeiten kann. Alternativ kann vorzugsweise ein Agenten-basiertes Modell verwendet werden, bei dem spezialisierte Agenten jeweils bestimmte Teilaufgaben übernehmen, wie die Bildanalyse, Textextraktion und/oder die Bewertung.

Ein Agenten-basiertes Modell ist vorzugsweise ein System, das aus mehreren autonomen Software-Agenten besteht, die in einer kooperativen Umgebung zusammenarbeiten, um komplexe Aufgaben zu bewältigen. Diese Agenten sind vorzugsweise darauf spezialisiert, spezifische Aufgaben wie die Extraktion von Produktmerkmalen, die Kontextanalyse und/oder die Entscheidungsvorbereitung durchzuführen, wobei sie untereinander Informationen austauschen und auf Basis von definierten Regeln und/oder maschinellen Lernverfahren agieren. Durch den Einsatz solcher Modelle kann vorzugsweise eine flexible und skalierbare Lösung zur automatisierten Erkennung und Validierung von Produktnachahmungen realisiert werden.

Das zweite maschinelle Lernmodell umfasst vorzugsweise ein Convolutional Neural Network (CNN) zur Verarbeitung von Bilddaten, das insbesondere für die Erkennung von Mustern, Formen und Texturen in Produktbildern geeignet ist. Für die Bearbeitung von Videodaten kann vorzugsweise ein Long-Short-Term-Memory-(LSTM)-Netzwerk oder ein 3D-CNN eingesetzt werden, um zeitliche Abfolgen und Bewegungen innerhalb der Videodaten zu analysieren. Zur Verarbeitung von Textdaten wird vorzugsweise ein Transformerbasiertes Modell wie BERT (Bidirectional Encoder Representations from Transformers) oder GPT (Generative Pre-trained Transformer) verwendet, das in der Lage ist, komplexe sprachliche Zusammenhänge und produktbezogene Begriffe zu erfassen. Numerische Daten können vorzugsweise durch Gradient Boosting Machines (GBM), Random Forest oder Deep Neural Networks (DNN) analysiert werden, um Muster, Anomalien oder Zusammenhänge in strukturierten Daten zu identifizieren. Für die Verarbeitung von Audiodaten eignet sich vorzugsweise ein Recurrent Neural Network (RNN) oder ein WaveNet-Modell, das akustische Merkmale analysieren und wiederkehrende Muster erkennen kann. Diese Modelle können einzeln oder in Kombination als multimodales maschinelles Lernmodell eingesetzt werden, um eine umfassende und genaue Analyse der verschiedenen Datenformate zu ermöglichen.

Bevorzugt kann das erste maschinelle Lernmodell das zweite maschinelle Lernmodell mit Informationen speisen. Bevorzugt kann das zweite maschinelle Lernmodell auch das erste maschinelle Lernmodell mit Informationen speisen. Ebenfalls bevorzugt können das erste maschinelle Lernmodell und das zweite maschinelle Lernmodell auch ein drittes maschinelles Lernmodell mit Informationen speisen. Ebenfalls bevorzugt kann das erste maschinelle Lernmodell als eine Komponente eines Transformers ausgebildet sein. Eine derartige Komponente kann eine Eingabeschicht oder allgemein eine Schicht in einer Transformer-Modellstruktur sein. Auch kann das zweite Sprachmodell als eine weitere Komponente des Transformers ausgebildet sein. Eine derartige weitere Komponente kann eine weitere Eingabeschicht oder allgemein eine weitere Schicht in der Transformer-Modellstruktur sein. Das erste maschinelle Lernmodell kann als eine CNN-Komponente eines Transformer-basierten Sprachmodells ausgebildet sein. Das zweite maschinelle Lernmodell kann als Encoder- und/oder Decoder-Komponente des Transformer-basierten Sprachmodells ausgebildet sein.

Die vorgeschlagene Lösung bietet vorzugsweise mehrere technische Vorteile, darunter eine erhebliche Reduzierung des manuellen Aufwands bei der Identifikation von Produktnachahmungen, eine höhere Erkennungsgenauigkeit durch den Einsatz von KI-gestützten Modellen sowie eine schnelle und skalierbare Verarbeitung großer Datenmengen von Online-Handelsplattformen. Darüber hinaus ermöglicht das System vorzugsweise eine kontinuierliche Verbesserung durch selbstlernende Algorithmen, die ihre Erkennungsfähigkeit auf Basis neuer Trainingsdaten optimieren. Die Integration multimodaler Daten, einschließlich Bild-, Text-, numerischer und Audiodaten, führt vorzugsweise zu einer ganzheitlichen Analyse und erhöht die Wahrscheinlichkeit, selbst geringfügige Abweichungen oder Änderungen in Nachahmungen zu erkennen. Ein weiterer technischer Vorteil besteht vorzugsweise in der automatisierten Extraktion von Anbieter- und Kontaktinformationen, wodurch rechtliche Schritte effizient vorbereitet und durchgeführt werden können. Ein weiterer Vorteil der beschriebenen Lösung liegt in der adaptiven Zuteilung von Rechenressourcen. Das System erkennt Belastungsspitzen, etwa durch eine plötzlich erhöhte Anzahl externer Datenanfragen, und passt Speicherpools, Thread-Prioritäten und Datenpuffer dynamisch an. Durch diese Betriebsstrategie wird verhindert, dass es zu Blockierungen oder Verzögerungen in der Datenpipeline kommt. Der technische Effekt äußert sich in einer stabilen Laufzeitperformance, die unabhängig von schwankenden Plattformbedingungen bleibt.

Die Verarbeitung unterschiedlicher Datenmodalitäten erfordert regelmäßig eine technische Harmonisierung der Eingangssignale, da diese typischerweise verschiedene Abtastraten, Auflösungen oder semantische Strukturierungen aufweisen. Die Erfindung stellt bevorzugt einen Verarbeitungsablauf bereit, der vorzugsweise die Signale vor einer weiteren Analyse normalisiert, synchronisiert und in ein einheitliches Merkmalsformat überführt. Dadurch wird ein konsistenter Datenfluss gewährleistet, der ein stabileres Rechenverhalten und eine verringerte Fehleranfälligkeit gegenüber Störsignalen bewirkt.

Die Umwandlung heterogener Eingangssignale in eine einheitliche mathematische Repräsentation ermöglicht insbesondere eine effizientere Nutzung moderner Rechenhardware wie GPUs oder spezialisierter Beschleunigungseinheiten. Insbesondere die lineare Algebra-basierte Verarbeitung erlaubt es, große Datenmengen im Batchbetrieb zu analysieren und hardwareseitige Parallelisierung vollständig auszunutzen. Hierdurch wird die Rechenzeit im Vergleich zu sequenziellen, regelbasierten Verfahren deutlich reduziert.

Das erste maschinelle Lernmodell kann vorzugsweise durch ein überwachtes oder teilweise überwachtes Lernverfahren trainiert werden, bei dem ein umfangreicher Datensatz aus Produktinformationen in Kombination mit Labels für Originalprodukte und Produktnachahmungen verwendet wird. Dabei werden vorzugsweise verschiedene Deep-Learning-Architekturen wie Convolutional Neural Networks (CNNs) für die Bildanalyse und Transformer-Modelle für die Textverarbeitung genutzt. Das erste maschinelle Lernmodell kann vorzugsweise mit augmentierten Daten trainiert werden, um seine Generalisierungsfähigkeit zu verbessern, beispielsweise durch Variationen in der Beleuchtung, Perspektive und/oder Bildauflösung. Die Trainingsdaten für das erste maschinelle Lernmodell umfassen vorzugsweise (hochauflösende) Produktbilder, Videoclips mit verschiedenen Blickwinkeln und/oder Anwendungsbeispielen, textuelle Beschreibungen einschließlich technischer Spezifikationen und produktbezogener Normen und/oder numerische und auditive Daten, die eine eindeutige Identifikation des Produkts ermöglichen. Vorzugsweise umfassen die Trainingsdaten Produktpaarungen, die jeweils ein Originalprodukt und ein Nachahmerprodukt aufweisen.

Das zweite maschinelle Lernmodell kann vorzugsweise durch ein Transfer-Learning-Verfahren trainiert werden, bei dem bereits vortrainierte Modelle mit spezifischen Trainingsdaten für die Produktvalidierung verfeinert werden. Dies kann vorzugsweise durch die Verwendung von Datensätzen erfolgen, die aus echten Fällen von Produktnachahmungen und/oder deren rechtlicher Beurteilung bestehen. Das zweite maschinelle Lernmodell kann vorzugsweise mit zusätzlichen Datenquellen trainiert werden, die externe juristische Datenbanken oder historische Fälle von Schutzrechtsverletzungen enthalten, um eine fundierte Bewertung der potenziellen Nachahmung zu ermöglichen. Die Trainingsdaten für das zweite maschinelle Lernmodell umfassen vorzugsweise detaillierte Merkmale von bereits identifizierten Nachahmungen, Muster rechtlicher Dokumente, Entscheidungskriterien von Experten und/oder Kontextinformationen, die für die Bewertung der Schutzrechtsverletzung relevant sind.

Ferner können das erste und das zweite maschinelle Lernmodell auch gemeinsam durch ein überwachtes, ein teilweise überwachtes oder ein unüberwachtes Lernverfahren trainiert werden. Dabei können Trainingsverfahren zum Trainieren von Transformer-basierten Modellen eingesetzt werden.

In einer bevorzugten Ausführungsform erfolgt die Verarbeitung datenflussgesteuert, sodass einzelne Module nur bei Vorliegen neuer Eingangssignale aktiviert werden. Dieser Mechanismus minimiert nicht nur den Energieverbrauch, sondern reduziert auch die Systembelastung durch überflüssige Berechnungen. Darüber hinaus verhindert die datenflussgesteuerte Architektur, dass veraltete Datenstände in nachgelagerte Verarbeitungsschritte gelangen, wodurch die Gesamtzuverlässigkeit erhöht wird.

In einem weiteren Aspekt wird vorgeschlagen, dass das Durchführen der automatisierten Suche ein Extrahieren von Merkmalen des Produktes aus den bereitgestellten Produktinformationen, ein Vergleichen der extrahierten Merkmale mit jeweiligen Produktmerkmalen einer Vielzahl von Produkten der Handelsplattform, und ein Ermitteln der potenziellen Produktnachahmung auf Basis des Vergleichs aufweist.

Dabei werden vorzugsweise charakteristische Merkmale des Produkts extrahiert, die eine eindeutige Identifikation und Differenzierung ermöglichen. Zu den bevorzugt ausgewählten Merkmalen zählen visuelle Merkmale wie Form, Farbe, Materialstruktur und/oder Logos, textuelle Merkmale wie Produktbeschreibung, technische Spezifikationen, Normen und/oder Markenhinweise sowie numerische Merkmale wie Preis, Abmessungen oder

Gewicht. Zusätzlich können vorzugsweise auditive Merkmale wie charakteristische Geräusche des Produkts berücksichtigt werden, sofern diese für die Identifikation relevant sind. Das Extrahieren von Bilddatenmerkmalen erfolgt vorzugsweise durch die Anwendung von Computer-Vision-Techniken, die auf maschinellen Lernmodellen basieren. Beispielsweise können Convolutional Neural Networks (CNNs) eingesetzt werden, um charakteristische Merkmale wie Kanten, Texturen und Muster in den Produktbildern zu identifizieren. Dabei können vorzugsweise mehrere Bildperspektiven verarbeitet werden, darunter 360°-Ansichten oder Detailaufnahmen bestimmter Produktbereiche, um eine möglichst umfassende Merkmalsextraktion zu gewährleisten. Eine Merkmalsextraktion kann zudem durch den Einsatz von Algorithmen zur Objektsegmentierung und -erkennung erfolgen, die einzelne Produktbestandteile isolieren und analysieren, um gezielte Vergleiche zu ermöglichen. Das Vergleichen der extrahierten Merkmale mit den jeweiligen Produktmerkmalen der Handelsplattform erfolgt vorzugsweise durch die Berechnung von Ähnlichkeitswerten mittels Deep-Learning-Techniken wie Embedding-Modellen, die die Produktmerkmale in numerische Vektoren überführen und mittels Distanzmetriken wie der Kosinus-Ähnlichkeit oder dem euklidischen Abstand vergleichen. Eine gewichtete Priorisierung bestimmter Merkmale, beispielsweise von Markenlogos und/oder Designelementen, kann vorzugsweise dazu beitragen, die Genauigkeit des Vergleichs zu erhöhen. Das Ermitteln der potenziellen Produktnachahmung basiert vorzugsweise auf einer kombinierten Analyse der visuellen, textuellen und numerischen Merkmale, wobei ein Schwellenwert oder ein Confidence-Score angewendet wird, um potenzielle Nachahmungen zu identifizieren. Das System kann vorzugsweise so konfiguriert werden, dass es Produkte mit hoher Ähnlichkeit automatisch als potenzielle Nachahmungen kennzeichnet und zur weiteren Validierung bereitstellt.

In diesem Kontext können patentrechtlich und/oder gebrauchsmusterrechtlich geschützte Merkmale des Produkts vorzugsweise priorisiert einbezogen werden, indem sie als entscheidende Vergleichskriterien in den Analyseprozess integriert werden. Dies kann vorzugsweise durch eine gezielte Extraktion und Hervorhebung von patentierten oder durch ein Gebrauchsmuster geschützten technischen Merkmalen erfolgen, die das Produkt von anderen unterscheiden. Hierbei können vorzugsweise technische Zeichnungen, strukturelle Merkmale, funktionale Spezifikationen und/oder geschützte Verfahren, die in den Patent- oder Gebrauchsmusterdokumenten detailliert beschrieben sind, extrahiert und in die Merkmalsdatenbank des maschinellen Lernmodells eingespeist werden. Die maschinelle Analyse kann diese geschützten Merkmale vorzugsweise durch textuelle und/oder visuelle Matching-Algorithmen besonders gewichten, um Nachahmungen gezielter und zuverlässiger zu erkennen. Darüber hinaus kann das System vorzugsweise eine automatische Abfrage von Patent- und Gebrauchsmusterregistern durchführen, um geschützte Merkmale mit den extrahierten Produktmerkmalen abzugleichen und eine Relevanzbewertung vorzunehmen. Zur weiteren Optimierung kann das Modell vorzugsweise spezifisch darauf trainiert werden, technische Schutzmerkmale priorisiert zu bewerten, indem es mit annotierten Datensätzen angereichert wird, die Fälle enthalten, in denen Patentverletzungen oder Gebrauchsmusterverletzungen identifiziert wurden. Dies ermöglicht eine effektive Erkennung potenzieller Nachahmungen, indem es die besonders schutzwürdigen technischen Merkmale berücksichtigt und priorisiert.

In einem weiteren Aspekt wird vorgeschlagen, dass das Validieren der potenziellen Produktnachahmung ein Ermitteln eines, insbesondere mehrstufigen, Ähnlichkeitsgrades zwischen dem Produkt und der potenziellen Produktnachahmung aufweist, und dass das Erzeugen der Ausgabedatei in Abhängigkeit des Ähnlichkeitsgrades, insbesondere durch Abstufung eines Detaillierungsgrades und/oder eines produktbezogenen Inhalts in der Ausgabedatei erfolgt, wobei die Ausgabedatei Textdaten und/oder Bilddaten zu dem Produkt und der tatsächlichen Produktnachahmung aufweist.

Die Ähnlichkeitsbewertung erfolgt vorzugsweise durch die Berechnung von Vergleichswerten unter Verwendung von Machine-Learning-Algorithmen, die Merkmale wie Form, Farbe, Material, technische Spezifikationen, Preis und rechtliche Schutzmerkmale berücksichtigen. Dabei wird vorzugsweise ein mehrstufiges Verfahren eingesetzt, das zunächst eine grobe Ähnlichkeitsprüfung durchführt und anschließend eine detaillierte Bewertung unter Einbeziehung priorisierter Produktmerkmale vornimmt.

Durch die mehrstufige Bewertung wird insbesondere eine technische Filterung vorgenommen, bei der bereits in frühen Stufen unzureichende Übereinstimmungen ausgesondert werden. Dadurch wird verhindert, dass nachfolgende, rechenintensive Module unnötig ausgelastet werden. Dieser Mechanismus führt zu einer signifikanten Verringerung der Gesamtlast und erhöht die Effizienz des Systems, da aufwendige Verarbeitungsschritte nur noch auf relevante Datensätze angewendet werden.

Das Erzeugen der Ausgabedatei erfolgt vorzugsweise in Abhängigkeit des ermittelten Ähnlichkeitsgrades, wobei der Inhalt und der Detaillierungsgrad der Datei dynamisch angepasst werden. Bei einem extrem hohen Ähnlichkeitsgrad, der eine eindeutige Nachahmung vermuten lässt, kann die Ausgabedatei vorzugsweise eine rechtliche Textdatei umfassen, die unmittelbar zur Durchsetzung von Schutzrechten verwendet werden kann, beispielsweise in Form einer Abmahnung oder Berechtigungsanfrage. In Fällen moderater Ähnlichkeit kann die Ausgabedatei vorzugsweise eine detaillierte Zusammenfassung der durchgeführten Ähnlichkeitsanalysen enthalten, einschließlich Bildvergleichen, textueller Differenzanalysen und/oder relevanter numerischer Abweichungen, um eine weitere Überprüfung durch einen Rechtsexperten oder Sachverständigen zu ermöglichen. Bei geringem Ähnlichkeitsgrad kann die Ausgabedatei vorzugsweise eine Kurzfassung der wichtigsten Übereinstimmungskriterien enthalten, die eine erneute Analyse oder eine Erweiterung des Suchraums empfiehlt.

Die Ausgabedatei umfasst vorzugsweise Textdaten und/oder Bilddaten, die eine umfassende Dokumentation der relevanten Informationen ermöglichen. Dies kann insbesondere hochauflösende Bilder der Original- und Nachahmungsprodukte, Textausschnitte von Produktbeschreibungen sowie Metadaten wie Anbieterinformationen und/oder Zeitstempel umfassen. Die Erzeugung der Ausgabedatei erfolgt vorzugsweise automatisiert, wobei die Inhalte flexibel an die spezifischen Anforderungen der weiteren Verarbeitung oder rechtlichen Durchsetzung angepasst werden können.

In einem weiteren Aspekt wird vorgeschlagen, dass das erste maschinelle Lernmodell und das zweite maschinelle Lernmodell in einem multimodalen maschinellen Lernmodell umfasst sind, oder dass das erste maschinelle Lernmodell ein Agentenmodell aufweist und das zweite maschinelle Lernmodell ein Agentenmodell aufweist, wobei die Agentenmodelle kommunikativ gekoppelt sind.

Die Agentenmodelle sind vorzugsweise kommunikativ gekoppelt, um Informationen auszutauschen und kooperativ zu agieren, beispielsweise durch die sequentielle Verarbeitung von Produktmerkmalen und/oder die parallele Bearbeitung unterschiedlicher Aspekte der Nachahmungserkennung. Diese gekoppelte Architektur ermöglicht eine höhere Effizienz, Flexibilität und Skalierbarkeit bei der Identifikation und Validierung von Produktnachahmungen.

Das System kann auch für den maschinenlesbaren Austausch mit externen Infrastrukturen optimiert sein. Durch die Nutzung standardisierter Transportformate und Protokolle werden Datenpakete vorzugsweise so strukturiert, dass sie unabhängig vom jeweiligen Endpunkt deterministisch verarbeitet werden können. Ein technischer Effekt besteht darin, dass Übertragungsfehler frühzeitig erkannt, automatisch korrigiert oder durch erneute Anforderung kompensiert werden können.

Das Verfahren kann so ausgelegt sein, dass rechenintensive Verarbeitungsschritte automatisch auf spezialisierte Hardwareeinheiten ausgelagert werden. Hierzu zählen Grafikprozessoren, Tensorverarbeitungseinheiten oder dedizierte Signalprozessoren. Durch die automatische Auswahl geeigneter Hardwarepfade wird nicht nur die Verarbeitungsgeschwindigkeit erhöht, sondern auch der Energieverbrauch reduziert, da Leerlaufzeiten minimiert und redundante Rechenoperationen vermieden werden.

Das System kann automatisch Skalierungsparameter anpassen, beispielsweise indem neue Rechenknoten hinzugefügt oder entfernt werden, sobald die Arbeitslast ein bestimmtes Niveau erreicht. Diese dynamische Skalierung verhindert Leistungsabfälle und ermöglicht es, große Datenmengen mit konstanter Geschwindigkeit zu bearbeiten. Ein technischer Vorteil besteht darin, dass das System unter hoher Belastung stabil und deterministisch arbeitet.

Für Datenpipelines, die verschiedene Verarbeitungsgeschwindigkeiten aufweisen, kann auch ein asynchroner Verarbeitungsmodus bereitgestellt werden. Dadurch ist gewährleistet, dass langsamere Module nicht die gesamte Pipeline blockieren. Dies verbessert die Stabilität des Systems insbesondere in Szenarien mit hoher Varianz der Datenqualität.

In einem weiteren Aspekt wird vorgeschlagen, dass die Informationen zu der tatsächlichen Produktnachahmung Anbieter- und/oder Kontaktinformationen umfassen, die aus der Online-Handelsplattform durch Web-Scraping und/oder durch Nutzung einer API-Schnittstelle ermittelt werden.

Die Anbieterinformationen können vorzugsweise Daten wie den Namen des Verkäufers, die Unternehmensadresse, Kontaktdetails wie E-Mail oder Telefonnummer sowie weitere geschäftsrelevante Angaben umfassen, die auf der Handelsplattform öffentlich verfügbar sind. Die Kontaktinformationen werden vorzugsweise aus strukturierten Datenquellen über eine API extrahiert und/oder durch Web-Scraping-Techniken aus unstrukturierten Webseiteninhalten gewonnen, indem Algorithmen zur Textextraktion und Mustererkennung eingesetzt werden.

Das Web-Scraping erfolgt vorzugsweise automatisiert und kontinuierlich, um aktuelle und vollständige Anbieterinformationen zu extrahieren, während die API-Schnittstellen bevorzugt für Handelsplattformen genutzt werden, die strukturierte Datenzugriffe ermöglichen und regelmäßig aktualisierte Informationen bereitstellen. Zur Sicherstellung der Datenqualität können vorzugsweise Validierungsmechanismen wie Formatüberprüfungen, Duplikaterkennung und/oder Abgleich mit externen Datenquellen eingesetzt werden.

In einem weiteren Aspekt wird vorgeschlagen, dass die Validierung der potenziellen Nachahmung auf Basis der vorbestimmten, priorisierten Produktinformation unter Verwendung eines Confidence-Scores erfolgt.

Der Confidence-Score wird vorzugsweise durch ein maschinelles Lernmodell berechnet, das die Ähnlichkeit zwischen der potenziellen Produktnachahmung und dem Originalprodukt anhand der priorisierten Merkmale quantifiziert. Dabei werden vorzugsweise statistische und/oder heuristische Methoden verwendet, um die Wahrscheinlichkeit zu bestimmen, mit der es sich um eine tatsächliche Nachahmung handelt. Ein hoher Confidence-Score weist vorzugsweise auf eine hohe Übereinstimmung hin und kann zur automatisierten Einleitung weiterer Schritte, wie der Generierung rechtlicher Dokumente oder der Meldung an Behörden, führen. Ein niedriger Confidence-Score hingegen kann vorzugsweise auf eine unzureichende Übereinstimmung hinweisen und eine manuelle Überprüfung durch Experten erforderlich machen.

Zur kontinuierlichen Verbesserung der Validierungsgenauigkeit können vorzugsweise selbstlernende Mechanismen implementiert werden, die anhand validierter Fälle die Gewichtung der priorisierten Produktinformationen optimieren. Dies ermöglicht eine anpassbare, präzise und zuverlässige Bewertung potenzieller Nachahmungen, wobei eine flexible Anpassung an unterschiedliche Produkttypen und Marktentwicklungen gewährleistet wird.

In einem weiteren Aspekt wird vorgeschlagen, dass das Erzeugen einer Ausgabedatei ein automatisiertes Generieren eines rechtlichen Dokuments, umfassend eine Berechtigungsanfrage und/oder eine Abmahnung und/oder eine Schadensersatzaufforderung aufweist.

Das automatisierte Generieren eines rechtlichen Dokuments ermöglicht eine effiziente und konsistente Reaktion auf Produktnachahmungen, indem relevante Informationen zur tatsächlichen Produktnachahmung wie Anbieter-und Kontaktinformationen sowie schutzrechtliche Details strukturiert und/oder in ein standardisiertes Format überführt werden. Hierbei werden vorzugsweise dynamische Vorlagen verwendet, die flexibel an den jeweiligen Fall angepasst werden können, um sicherzustellen, dass alle rechtlich erforderlichen Angaben enthalten sind. Die Erstellung erfolgt unter Berücksichtigung relevanter Schutzrechte und gesetzlicher Vorgaben, wobei Fristen, mögliche Forderungen und/oder rechtliche Konsequenzen automatisch eingefügt werden. Dabei können regelbasierte Algorithmen genutzt werden, die bestimmte Kriterien zur Erzeugung des Dokuments anwenden, oder KI-gestützte Modelle einsetzen, die aus früheren Fällen lernen und die Qualität der generierten Inhalte kontinuierlich verbessern. Technische Vorteile dieses Verfahrens bestehen in der erheblichen Zeit- und Kostenersparnis durch die Reduzierung manueller Aufwände sowie der Minimierung von Fehlerquellen durch automatisierte Prozesse. Die konsistente Anwendung rechtlicher Standards stellt sicher, dass alle generierten Dokumente den formalen und inhaltlichen Anforderungen entsprechen. Darüber hinaus ermöglicht die Integration mit externen Plattformen, Anwaltskanzleien oder Behörden eine schnelle Übermittlung und Nachverfolgung der dokumentierten Nachahmungsfälle. Die automatische Speicherung und Archivierung der erzeugten Dokumente erleichtert zudem eine strukturierte Verwaltung und bietet eine verbesserte Erfolgsanalyse über verschiedene Fälle hinweg.

Zur Erhaltung der Datenintegrität kann ein transaktionsbasierter Speichermechanismus eingesetzt werden, der ermöglichen kann, dass parallel ausgeführte Operationen nicht zu widersprüchlichen Datenständen führen. Änderungen an großen Datenobjekten können inkrementell erfolgen, wodurch Speicherzugriffe beschleunigt und unnötige Kopiervorgänge vermieden werden können. Dies verbessert die Gesamtperformance des Systems und reduziert den Speicherbedarf.

Zur Sicherstellung der Datenintegrität während der Verarbeitung können kryptografische Prüfsummen, Versionskennzeichnungen oder Hashwerte erzeugt werden. Diese ermöglichen eine Verifizierung der Datenkonsistenz innerhalb der Pipeline und verhindern, dass manipulierte oder unvollständige Daten in kritische Verarbeitungsschritte gelangen. Dadurch wird die Betriebssicherheit des Gesamtsystems erhöht.

Für den Fall, dass externe Quellen nicht erreichbar sind, unvollständige Informationen liefern oder zeitweise inkonsistent reagieren, kann das System einen Mechanismus zur automatisierten Fehlerbehandlung aufweisen. Dieser kann die betroffenen Verarbeitungsschritte zurücksetzen, alternative Datenquellen nutzen oder definierte Wiederholungsintervalle anwenden. Dadurch bleibt die Datenpipeline funktionsfähig, selbst wenn einzelne Module zeitweise nicht operabel sind.

Zwischenresultate können in Puffern oder zwischengespeicherten Speicherbereichen abgelegt werden, um Mehrfachverarbeitungen identischer Datensätze zu vermeiden. Dies kann insbesondere bei Echtzeitanalysen relevant sein, da dieselben Inhalte häufig mehrfach auftauchen. Durch eine konsistente Cache-Hierarchie lässt sich die Rechenlast erheblich reduzieren, was die Systemreaktionszeit weiter verbessert.

In einem weiteren Aspekt wird vorgeschlagen, dass die Ausgabedatei über eine Schnittstelle einer Zollbehörde bereitgestellt wird, um insbesondere automatisiert ein Beschlagnahmungsverfahren einzuleiten.

Die Bereitstellung der Ausgabedatei über eine Schnittstelle einer Zollbehörde ermöglicht eine direkte und automatisierte Einleitung von Beschlagnahmungsverfahren, indem relevante Informationen zur tatsächlichen Produktnachahmung in strukturierter Form übermittelt werden. Die Schnittstelle kann als API oder Webservice ausgestaltet sein, wodurch ein standardisierter Datenaustausch gewährleistet wird. Die übermittelten Daten umfassen vorzugsweise Details zum nachgeahmten Produkt, einschließlich Bild- und Textdaten, sowie Informationen zum Anbieter und den relevanten Schutzrechten. Dies ermöglicht es den Zollbehörden, eingehende Warenlieferungen effizient zu überprüfen und gegebenenfalls Maßnahmen zur Beschlagnahmung oder zur weiteren rechtlichen Verfolgung einzuleiten.

Technische Vorteile ergeben sich durch die Automatisierung des Prozesses, die eine schnelle, fehlerfreie und kontinuierliche Bereitstellung von Informationen sicherstellt. Dadurch wird die Durchsetzung von Schutzrechten beschleunigt und vereinfacht. Zudem reduziert die automatische Bereitstellung über eine Schnittstelle den manuellen Aufwand sowohl auf Seiten des Rechteinhabers als auch bei den Zollbehörden, wodurch Ressourcen geschont werden. Die standardisierte Datenübertragung ermöglicht zudem eine nahtlose Integration mit bestehenden Zollsystemen, was eine hohe Kompatibilität und Skalierbarkeit gewährleistet.

In einem weiteren Aspekt wird vorgeschlagen, dass die potenzielle Produktnachahmung zur Validierung über eine Schnittstelle an eine Infrastruktur eines Rechtsexperten bereitgestellt wird, und dass das Erzeugen einer Ausgabedatei unter Verwendung von Informationen zu dem Rechtsexperten, die mittels der Infrastruktur extrahierbar sind, erfolgt.

Die Bereitstellung der potenziellen Produktnachahmung zur Validierung über eine Schnittstelle an die Infrastruktur eines Rechtsexperten ermöglicht eine effiziente und strukturierte Überprüfung durch qualifizierte Fachkräfte. Die Schnittstelle kann vorzugsweise als API oder Webportal realisiert sein, die eine sichere und standardisierte Übermittlung der relevanten Produktinformationen, einschließlich Bild- und Textdaten, Schutzrechten sowie Anbieter- und Marktplatzdetails, ermöglicht. Die Infrastruktur des Rechtsexperten kann vorzugsweise ein digitales Fallmanagementsystem umfassen, das eine effiziente Bearbeitung, Kommentierung und rechtliche Bewertung der potenziellen Nachahmung erlaubt.

Das Erzeugen der Ausgabedatei erfolgt unter Berücksichtigung der durch den Rechtsexperten bereitgestellten Informationen, die vorzugsweise automatisch aus der Infrastruktur extrahiert werden. Diese Informationen können Einschätzungen zur Schutzrechtsverletzung, Empfehlungen zu weiteren Maßnahmen und/oder ergänzende Beweisdokumente umfassen. Die automatische Einbindung dieser Informationen in die Ausgabedatei gewährleistet vorzugsweise eine vollständige und rechtssichere Dokumentation des Falls.

Technische Vorteile ergeben sich durch die Automatisierung und Standardisierung des Validierungsprozesses, wodurch Fehler reduziert und die Bearbeitungszeit verkürzt werden. Die Möglichkeit zur digitalen Zusammenarbeit zwischen System und Rechtsexperten führt zu einer effizienteren Entscheidungsfindung und ermöglicht eine schnelle Einleitung rechtlicher Schritte. Zudem erlaubt die Anbindung an bestehende Infrastrukturen eine nahtlose Integration in bestehende Workflows und eine transparente Fallverfolgung.

In einem weiteren Aspekt wird vorgeschlagen, dass das Durchführen einer automatisierten Suche kontinuierlich und vorzugsweise in Echtzeit erfolgt.

Dadurch können neue potenzielle Produktnachahmungen frühzeitig erkannt werden. Die kontinuierliche Suche erfolgt vorzugsweise durch regelmäßige Überprüfungen von Online-Handelsplattformen mittels Web-Crawling, API-Schnittstellen und/oder Streaming-Technologien, um neue Angebote von Nachahmerprodukten möglichst zeitnah zu identifizieren. Die Echtzeitsuche ermöglicht vorzugsweise eine sofortige Analyse und Erkennung von Nachahmungen unmittelbar nach dem Hochladen neuer Angebote.

Da Online-Plattformen sehr unterschiedliche Auflösungen, Formate und Kompressionsverfahren verwenden können, kann die Eingangsqualität der erfassten Daten stark schwanken. Das System kann daher eine Vorverarbeitungsschicht vorsehen, die Störungen wie Rauschen, Artefakte, Unschärfen und/oder Kompressionsverluste reduziert und fehlende Informationsanteile teilweise rekonstruiert. Dies erhöht die Robustheit des Verarbeitungsablaufs und führt zu belastbareren Analyseergebnissen, insbesondere wenn Datenquellen technisch minderwertig sind.

Handelsplattformen ändern zudem regelmäßig ihre Layouts, HTML-Strukturen und/oder API-Antwortformate. Die Erfindung kann dies berücksichtigen, indem sie einen modularen Parser verwendet, der anhand von Heuristiken oder wiederkehrenden Strukturelementen automatisch Anpassungen vornehmen kann. Dadurch bleibt das System selbst bei strukturellen Plattformänderungen betriebsfähig, ohne dass manuelle Eingriffe erforderlich sind.

Vorliegend kann adaptiv auf sich ändernde Plattformstrukturen reagiert und durch maschinelles Lernen kontinuierlich die Suchparameter optimiert werden. Eine cloud- oder serverbasierte Lösung sorgt vorzugsweise für eine skalierbare und sichere Verarbeitung großer Datenmengen, wobei eine schnelle Reaktionszeit durch verteilte Verarbeitung gewährleistet wird.

In bevorzugten Ausführungsformen wird das Gesamtsystem in einer verteilten Rechnerumgebung betrieben, die aus mehreren, parallel arbeitenden Knoten besteht. Durch die Aufteilung rechenintensiver Verarbeitungsschritte auf voneinander unabhängige Ressourcen wird die Latenzzeit verringert und die Durchsatzrate erhöht. Eine solche Architektur erlaubt es insbesondere, große Mengen heterogener Eingangsdaten innerhalb kurzer Zeitspannen zu verarbeiten, ohne dass Engpässe im Datenpfad auftreten. Die Ausgestaltung ist somit darauf ausgelegt, ein technisches Leistungsziel, nämlich eine deterministische Antwortzeit trotz hoher Lastschwankungen, einzuhalten.

Zusätzlich kann eine Alarmierungsfunktion vorgesehen sein, die relevante Nutzer wie Rechtsabteilungen und/oder Anwälte in Echtzeit über Funde informiert. Dies ermöglicht eine effiziente und zeitnahe Bekämpfung von Produktnachahmungen und reduziert den manuellen Aufwand erheblich.

In einem weiteren Aspekt wird vorgeschlagen, dass mindestens das erste maschinelle Lernmodell auf Basis von validierten tatsächlichen Produktnachahmungen, insbesondere fortlaufend, trainiert wird.

Validierte tatsächliche Produktnachahmungen umfassen vorzugsweise Produktangebote, die durch eine Kombination aus automatisierter Erkennung und manueller Überprüfung als Nachahmungen bestätigt wurden. Diese validierten Daten enthalten vorzugsweise eine Vielzahl an Merkmalen, darunter visuelle, textuelle, numerische und auditive Eigenschaften, die eine eindeutige Identifikation der Nachahmung im Vergleich zum Originalprodukt ermöglichen. Das Training des maschinellen Lernmodells erfolgt vorzugsweise kontinuierlich durch die Integration neuer Nachahmungsfälle, wodurch das Modell in der Lage ist, sich an sich verändernde Nachahmungsmuster anzupassen und seine Erkennungsgenauigkeit zu verbessern.

Das Training des ersten maschinellen Lernmodells basiert vorzugsweise auf überwachtem Lernen, bei dem die validierten Nachahmungsdaten als gelabelte Trainingsdaten verwendet werden. Dabei werden vorzugsweise verschiedene Trainingsmethoden angewandt, wie Transfer Learning, um bestehende Wissensstrukturen effizient auf neue Daten zu übertragen, und/oder inkrementelles Lernen, um das Modell mit neuen Fällen ohne erneutes Training des gesamten Modells zu aktualisieren. Darüber hinaus kann vorzugsweise aktives Lernen eingesetzt werden, um gezielt die Unsicherheiten des Modells durch Nutzerfeedback zu reduzieren und die Qualität des Trainingsprozesses zu verbessern.

Die Trainingsdaten für das erste maschinelle Lernmodell umfassen vorzugsweise eine Vielzahl von Datenquellen, darunter hochauflösende Produktbilder aus verschiedenen Blickwinkeln, textuelle Beschreibungen von Produktmerkmalen und Schutzrechten, numerische Daten wie Preise und Abmessungen sowie Audiodaten, die charakteristische Geräusche oder Klänge des Produkts enthalten. Die Daten werden vorzugsweise angereichert durch Metadaten wie Anbieterinformationen, Verkaufsplattformen, geografische Herkunft der Angebote sowie frühere Nachahmungsmuster, um eine umfassende Grundlage für die Modelloptimierung zu schaffen.

Das fortlaufende Training des Modells erfolgt vorzugsweise in einem iterativen Prozess, bei dem neue validierte Nachahmungen regelmäßig in den Trainingsdatensatz aufgenommen werden, während veraltete und/oder nicht mehr relevante Daten entfernt werden. Dies ermöglicht vorzugsweise eine kontinuierliche Verbesserung der Erkennungsgenauigkeit und/oder eine Reduzierung von False Positives und False Negatives. Auch kann eine Überanpassung (Overfitting) des betreffenden Modells derart reduziert werden. Zur Sicherstellung einer effizienten Nutzung der Rechenressourcen kann das Training vorzugsweise in einer cloudbasierten Umgebung erfolgen, in der skalierbare Rechenkapazitäten dynamisch bereitgestellt werden können. Alternativ kann das Training auf lokalen Servern durchgeführt werden, wobei leistungsfähige Hardware und optimierte Algorithmen zur Minimierung der Trainingszeit eingesetzt werden.

In einem weiteren Aspekt wird vorgeschlagen, dass die bereitgestellten Produktinformationen in einer zentralen Datenbank zum strukturierten Abfragen von Merkmalen des Produktes gespeichert werden.

Die bereitgestellten Produktinformationen, die in einer zentralen Datenbank zum strukturierten Abfragen von Merkmalen des Produktes gespeichert werden, umfassen vorzugsweise verschiedene Datentypen, die eine umfassende und strukturierte Darstellung des Produkts ermöglichen. Dazu gehören vorzugsweise Bilddaten, die hochauflösende Produktaufnahmen aus mehreren Blickwinkeln, 360°-Ansichten oder Innenansichten des Produkts umfassen, Videodaten, die das Produkt in der Anwendung oder Demonstration zeigen, sowie Textdaten, die detaillierte Produktbeschreibungen, technische Spezifikationen, Anwendungsbereiche, Normen und Standards enthalten. Darüber hinaus können die Produktinformationen vorzugsweise schutzrechtliche Daten wie Markenregistrierungen, Patente, Gebrauchsmuster und Designschutz umfassen, numerische Daten wie Preis, Abmessungen, Gewicht und weitere quantitative Parameter sowie Audiodaten, die den charakteristischen Klang eines Produkts abbilden und möglicherweise unter rechtlichem Schutz stehen.

Eine derartige zentrale Datenbank kann vorzugsweise als relationale oder NoSQL-Datenbank ausgebildet sein, um strukturierte und unstrukturierte Produktinformationen effizient zu speichern und zu verwalten. Eine relationale Datenbank, wie beispielsweise MySQL oder PostgreSQL, bietet vorzugsweise den Vorteil einer klaren Strukturierung der Daten in Tabellen mit definierten Beziehungen, was insbesondere für Produkte mit festgelegten Attributen vorteilhaft ist. Alternativ kann eine NoSQL-Datenbank wie MongoDB oder Cassandra verwendet werden, die vorzugsweise eine flexible Speicherung von Daten in Form von Dokumenten oder Key-Value-Paaren ermöglicht, um dynamisch wachsende Produktinformationen zu unterstützen. Zur Optimierung der Abfragegeschwindigkeit können vorzugsweise Indexierungsmechanismen, Caching-Technologien und verteilte Architekturen eingesetzt werden.

Eine cloud- oder serverbasierte Lösung für die zentrale Datenbank kann vorzugsweise über etablierte Cloud-Plattformen wie Amazon Web Services (AWS), Microsoft Azure oder Google Cloud realisiert werden. Diese Plattformen bieten vorzugsweise skalierbare Speicherlösungen wie Amazon RDS oder Google Firestore, die eine automatische Skalierung der Datenbankkapazität ermöglichen und eine hohe Verfügbarkeit gewährleisten. Alternativ kann eine serverbasierte Lösung in Form eines eigenen On-Premises-Servers implementiert werden, der vorzugsweise mit leistungsfähigen Speicher- und Verarbeitungskapazitäten ausgestattet ist, um die Produktinformationen sicher zu speichern und den Zugriff durch berechtigte Nutzer zu gewährleisten. In beiden Fällen kann die Datenbank vorzugsweise durch API-Schnittstellen mit anderen Systemen, wie der KI-gestützten Erkennungssoftware oder externen Datenquellen, integriert werden, um einen nahtlosen Datenfluss zu gewährleisten.

Zusätzlich kann die Datenbank vorzugsweise über ein rollenbasiertes Zugriffskontrollsystem verfügen, das eine granulare Steuerung des Datenzugriffs ermöglicht, um sicherzustellen, dass nur autorisierte Nutzer bestimmte Produktinformationen einsehen und/oder bearbeiten können. Weiterhin kann vorzugsweise eine regelmäßige Datensicherung durch automatische Backups und eine Verschlüsselung der gespeicherten Daten erfolgen, um Datenschutzrichtlinien und Sicherheitsstandards einzuhalten.

Weiterhin wird ein Computerprogrammprodukt vorgeschlagen, welches Befehle umfasst, die bei der Ausführung des Programms durch einen Computer diesen veranlassen, das vorstehend beschriebene Verfahren auszuführen.

Ein Computerprogrammprodukt, wie z. B. ein Computerprogramm-Mittel, kann beispielsweise als Speichermedium, insbesondere als computerlesbarer Datenträger, wie z. B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Die beschriebenen Ausgestaltungen und Weiterbildungen lassen sich beliebig miteinander kombinieren.

Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung.

### Kurze Beschreibung der Zeichnungen

Die beiliegenden Zeichnungen sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung.

Andere Ausführungsformen und viele der genannten Vorteile ergeben sich im Hinblick auf die Zeichnungen. Die dargestellten Elemente der Zeichnungen sind nicht notwendigerweise maßstabsgetreu zueinander gezeigt.
- Fig. 1: zeigt eine schematische Darstellung einer Ausführungsform der vorliegenden Vorrichtung.
- Fig. 2: zeigt ein schematisches Flussdiagramm einer Ausführungsform des vorliegenden Verfahrens.

### Detaillierte Beschreibung der Zeichnungen

In den Figuren der Zeichnungen bezeichnen gleiche Bezugszeichen gleiche oder funktionsgleiche Elemente, Bauteile oder Komponenten, soweit nichts Gegenteiliges angegeben ist.

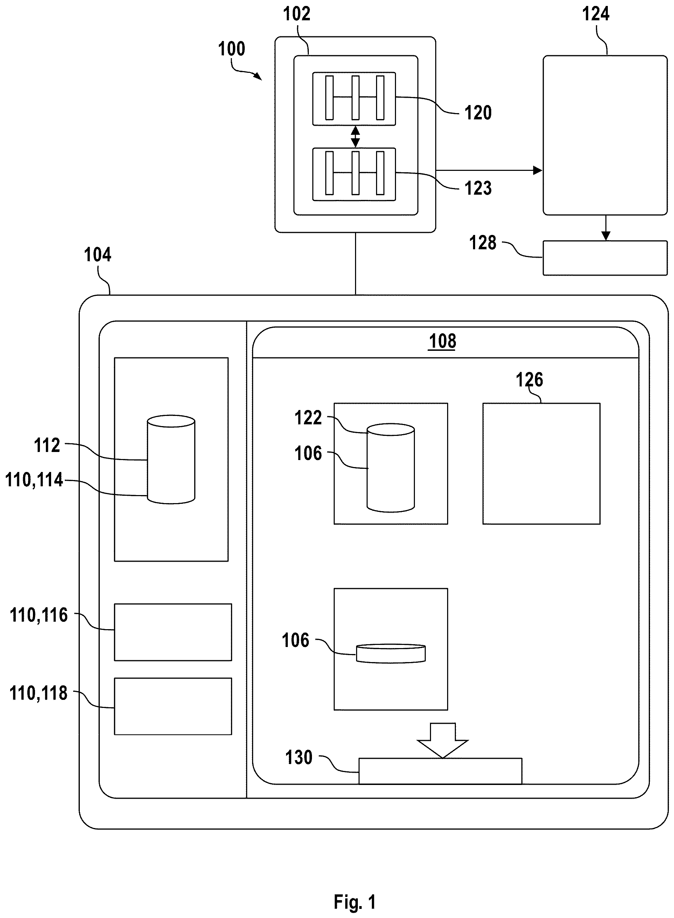

Fig. 1 zeigt eine schematische Darstellung einer Ausführungsform der vorliegenden Vorrichtung 100. Die Vorrichtung 100 weist eine Recheneinrichtung 102 auf. Die Vorrichtung 100 weist vorliegend eine Anzeigeeinrichtung 104 auf. Ferner kann die Vorrichtung 100 eine Bereitstellungseinrichtung und/oder eine Speichereinrichtung und/oder eine Ausgabeeinrichtung und/oder eine Eingabeeinrichtung umfassen (nicht gezeigt). Es versteht sich, dass diese Einrichtungen gemeinsam mit der Recheneinrichtung 102 ausgebildet sein können, oder von dieser unterschiedlich sein können. Ferner kann die Vorrichtung 100 Teil eines nicht näher gezeigten Systems sein.

Die Vorrichtung 100 ist zur automatisierten Erkennung einer Produktnachahmung 106 auf einer Online-Handelsplattform 108 ausgebildet. Dabei werden beispielsweise Produktinformationen 110 zu einem Produkt 112 bereitgestellt. Die Produktinformationen 110 umfassen dabei Bilddaten 114 und/oder Videodaten, Textdaten 116, insbesondere eine Produktbeschreibung und/oder schutzrechtliche Daten zu dem Produkt 112, und/oder numerische Daten 118 und/oder Audiodaten.

Die Recheneinrichtung 102, die auf einem Cloudservice ausgebildet sein kann, führt eine automatisierte Suche auf der Online-Handelsplattform 108 nach der potenziellen Produktnachahmung 106 durch, wobei hierzu ein erstes maschinelles Lernmodell 120 unter Verwendung der bereitgestellten Produktinformationen 110 verwendet wird, das auf der Recheneinrichtung 102 ausführbar ist. Bei der Suche werden Merkmale des Produktes 112 aus den bereitgestellten Produktinformationen 110, 114, 116, 118 extrahiert, die extrahierten Merkmale mit jeweiligen Produktmerkmalen einer Vielzahl von Produkten der Handelsplattform 108 verglichen, und die potenzielle Produktnachahmung 106 auf Basis des Vergleichs ermittelt. Die automatisierte Suche erfolgt vorzugsweise kontinuierlich und besonders bevorzugt in Echtzeit. Die bereitgestellten Produktinformationen 110 werden in einer zentralen Datenbank zum strukturierten Abfragen von Merkmalen des Produktes 112 gespeichert.

Darauffolgend wird die potenzielle Produktnachahmung 106 auf Basis einer vorbestimmten, priorisierten Produktinformation (vorliegend beispielsweise die Bilddaten 114) der bereitgestellten Produktinformationen 110 zum Ermitteln einer tatsächlichen Produktnachahmung 122 validiert. Die Validierung der potenziellen Produktnachahmung 106 weist dabei ein Ermitteln eines mehrstufigen Ähnlichkeitsgrades zwischen dem Produkt 112 und der potenziellen Produktnachahmung 106 auf. Die Validierung der potenziellen Nachahmung 106 erfolgt dabei vorzugsweise auf Basis der vorbestimmten, priorisierten Produktinformation 110 unter Verwendung eines Confidence-Scores.

Auf Basis der Validierung wird dann durch ein zweites maschinelles Lernmodell 123 eine Ausgabedatei 124 zu der tatsächlichen Produktnachahmung 122 unter Verwendung von Informationen 126 zu der tatsächlichen Produktnachahmung 122 und den bereitgestellten Produktinformationen 110 erzeugt. Die Ausgabedatei 124 wird in Abhängigkeit des Ähnlichkeitsgrades, insbesondere durch Abstufung eines Detaillierungsgrades und/oder eines produktbezogenen Inhalts in der Ausgabedatei 124 erzeugt. Die Ausgabedatei 124 kann Textdaten und/oder Bilddaten zu dem Produkt 112 und der tatsächlichen Produktnachahmung 122, beispielsweise eine Berechtigungsanfrage und/oder eine Abmahnung und/oder eine Schadensersatzaufforderung, aufweisen. Die Informationen 126 zu der tatsächlichen Produktnachahmung 122 weisen Anbieter- und/oder Kontaktinformationen auf, die aus der Online-Handelsplattform 108 durch Web-Scraping und/oder durch Nutzung einer API-Schnittstelle ermittelt werden.

Das erste maschinelle Lernmodell 120 und das zweite maschinelle Lernmodell 123 sind beispielsweise in einem multimodalen maschinellen Lernmodell umfasst. Alternativ weisen das erste maschinelle Lernmodell 120 und das zweite maschinelle Lernmodell 123 jeweils ein Agentenmodell auf, wobei die Agentenmodelle kommunikativ gekoppelt sind. Mindestens das erste maschinelle Lernmodell 120 kann auf Basis von validierten tatsächlichen Produktnachahmungen 122, insbesondere fortlaufend, trainiert werden.

Die Ausgabedatei 124 kann über eine Schnittstelle 128 einer Zollbehörde bereitgestellt werden, um insbesondere automatisiert ein Beschlagnahmungsverfahren einzuleiten.

Die potenzielle Produktnachahmung 106 kann zur Validierung auch über eine Schnittstelle 130 an eine Infrastruktur eines Rechtsexperten bereitgestellt werden. Das Erzeugen der Ausgabedatei 124 kann dann unter Verwendung von Informationen zu dem Rechtsexperten, die mittels der Infrastruktur extrahierbar sind, erfolgen.

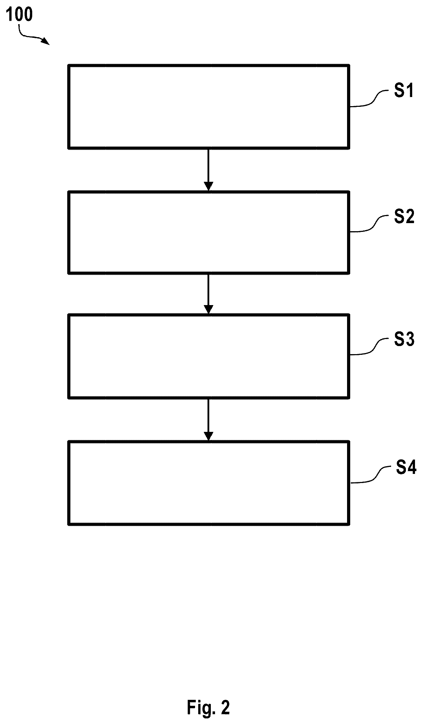

Fig. 2 zeigt ein schematisches Flussdiagramm eines Ausführungsbeispiels des vorliegenden Verfahrens zur automatisierten Erkennung einer Produktnachahmung auf einer Online-Handelsplattform.

Das Verfahren kann in einer beliebigen Ausführungsform durch die Vorrichtung 100 ausgeführt werden.

Das computerimplementierte Verfahren umfasst mindestens die folgenden Schritte:
In einem Schritt S1 erfolgt ein Bereitstellen von Produktinformationen 110 zu einem Produkt 112, wobei die Produktinformationen Bilddaten 114 und/oder Videodaten, Textdaten 116, insbesondere eine Produktbeschreibung und/oder schutzrechtliche Daten zu dem Produkt, und/oder numerische Daten 118 und/oder Audiodaten aufweisen.

In einem Schritt S2 erfolgt ein Durchführen einer automatisierten Suche auf der Online-Handelsplattform 108 nach einer potenziellen Produktnachahmung 106 mittels eines ersten maschinellen Lemmodells 120 unter Verwendung der bereitgestellten Produktinformationen 110.

In einem Schritt S3 erfolgt ein Validieren der potenziellen Produktnachahmung 106 auf Basis einer vorbestimmten, priorisierten Produktinformation der bereitgestellten Produktinformationen 110 zum Ermitteln einer tatsächlichen Produktnachahmung 122.

In einem Schritt S4 erfolgt ein Erzeugen einer Ausgabedatei 124 zu der tatsächlichen Produktnachahmung 122 unter Verwendung von Informationen 126 zu der tatsächlichen Produktnachahmung 122 und der bereitgestellten Produktinformationen 110 durch ein zweites maschinelles Lernmodell 123.

### Bezugszeichenliste

- 100: Vorrichtung
- 102: Recheneinrichtung
- 104: Anzeigeeinrichtung
- 106: Produktnachahmung
- 108: Online-Handelsplattform
- 110: Produktinformationen
- 112: Produkt
- 114: Bilddaten
- 116: Textdaten
- 118: numerische Daten
- 120: erstes maschinelles Lernmodell
- 122: tatsächliche Produktnachahmung
- 123: zweites maschinelles Lernmodell
- 124: Ausgabedatei
- 126: Informationen zu der tatsächlichen Produktnachahmung
- 128: Schnittstelle
- 130: Schnittstelle

- S1: Verfahrensschritt "Bereitstellen"
- S2: Verfahrensschritt "Durchführen"
- S3: Verfahrensschritt "Validieren"
- S4: Verfahrensschritt "Erzeugen"

## Patentansprüche

1. Verfahren zur Erkennung einer Produktnachahmung (106) auf einer Online-Handelsplattform (108), das Verfahren umfassend die Schritte:
Bereitstellen (S1) von Produktinformationen (110) zu einem Produkt (112), wobei die Produktinformationen (110) Bilddaten (114) und/oder Videodaten, Textdaten (116) und/oder numerische Daten (118) und/oder Audiodaten aufweisen;
Durchführen (S2) einer automatisierten Suche auf der Online-Handelsplattform (108) nach einer potenziellen Produktnachahmung (106) mittels eines ersten maschinellen Lernmodells (120) unter Verwendung der bereitgestellten Produktinformationen (110);
Validieren (S3) der potenziellen Produktnachahmung (106) auf Basis einer vorbestimmten, priorisierten Produktinformation (114, 116, 118) der bereitgestellten Produktinformationen (110) zum Ermitteln einer tatsächlichen Produktnachahmung (122); und
Erzeugen (S4) einer Ausgabedatei (124) zu der tatsächlichen Produktnachahmung (122) unter Verwendung von Informationen (126) zu der tatsächlichen Produktnachahmung (122) und der bereitgestellten Produktinformationen (110) durch ein zweites maschinelles Lernmodell (123).

2. Verfahren nach Anspruch 1, wobei das Durchführen (S2) der automatisierten Suche ein Extrahieren von Merkmalen des Produktes (112) aus den bereitgestellten Produktinformationen (110), ein Vergleichen der extrahierten Merkmale mit jeweiligen Produktmerkmalen einer Vielzahl von Produkten der Handelsplattform (108), und ein Ermitteln der potenziellen Produktnachahmung (106) auf Basis des Vergleichs aufweist.

3. Verfahren nach Anspruch 1 oder 2, wobei das Validieren (S3) der potenziellen Produktnachahmung (106) ein Ermitteln eines Ähnlichkeitsgrades zwischen dem Produkt (112) und der potenziellen Produktnachahmung (106) aufweist, und wobei das Erzeugen der Ausgabedatei (124) in Abhängigkeit des Ähnlichkeitsgrades erfolgt, und wobei die Ausgabedatei (124) Textdaten (116) und/oder Bilddaten (114) zu dem Produkt (112) und der tatsächlichen Produktnachahmung (122) aufweist.

4. Verfahren nach einem der vorhergehenden Ansprüche, wobei das erste maschinelle Lernmodell (120) und das zweite maschinelle Lernmodell (123) in einem multimodalen maschinellen Lernmodell umfasst sind, oder wobei das erste maschinelle Lernmodell (120) ein Agentenmodell aufweist und das zweite maschinelle Lernmodell (123) ein Agentenmodell aufweist, wobei die Agentenmodelle kommunikativ gekoppelt sind.

5. Verfahren nach einem der vorhergehenden Ansprüche, wobei die Informationen (126) zu der tatsächlichen Produktnachahmung (122) Anbieter- und/oder Kontaktinformationen umfassen, die aus der Online-Handelsplattform (108) durch Web-Scraping und/oder durch Nutzung einer API-Schnittstelle ermittelt werden.

6. Verfahren nach einem der vorhergehenden Ansprüche, wobei die Validierung (S3) der potenziellen Nachahmung (106) auf Basis der vorbestimmten, priorisierten Produktinformation (114, 116, 118) unter Verwendung eines Confidence-Scores erfolgt.

7. Verfahren nach einem der vorhergehenden Ansprüche, wobei das Erzeugen (S4) einer Ausgabedatei (124) ein automatisiertes Generieren eines rechtlichen Dokuments, umfassend eine Berechtigungsanfrage und/oder eine Abmahnung und/oder eine Schadensersatzaufforderung aufweist.

8. Verfahren nach einem der vorhergehenden Ansprüche, wobei die Ausgabedatei (124) über eine Schnittstelle (128) einer Zollbehörde bereitgestellt wird, um insbesondere automatisiert ein Beschlagnahmungsverfahren einzuleiten.

9. Verfahren nach einem der vorhergehenden Ansprüche, wobei die potenzielle Produktnachahmung (106) zur Validierung über eine Schnittstelle (130) an eine Infrastruktur eines Rechtsexperten bereitgestellt wird, und wobei das Erzeugen einer Ausgabedatei (124) unter Verwendung von Informationen zu dem Rechtsexperten, die mittels der Infrastruktur extrahierbar sind, erfolgt.

10. Verfahren nach einem der vorhergehenden Ansprüche, wobei das Durchführen (S2) einer automatisierten Suche kontinuierlich und vorzugsweise in Echtzeit erfolgt.

11. Verfahren nach einem der vorhergehenden Ansprüche, wobei mindestens das erste maschinelle Lernmodell (120) auf Basis von validierten tatsächlichen Produktnachahmungen (122) trainiert wird.

12. Verfahren nach einem der vorhergehenden Ansprüche, wobei die bereitgestellten Produktinformationen (110) in einer zentralen Datenbank zum strukturierten Abfragen von Merkmalen des Produktes (112) gespeichert werden.

13. Computerprogrammprodukt, das auf einem computerlesbaren Medium gespeichert ist und Programmcode umfasst, der, wenn er auf einem Computer ausgeführt wird, den Computer dazu veranlasst, die Schritte eines Verfahrens gemäß einem der Ansprüche 1 bis 12 auszuführen.

14. Computerlesbarer Datenträger, auf dem das Computerprogrammprodukt nach Anspruch 13 gespeichert ist.

15. Vorrichtung (100) zur Erkennung einer Produktnachahmung (106) auf einer Online-Handelsplattform (108), wobei die Vorrichtung (100) eine Recheneinrichtung (102) aufweist, die dazu ausgebildet ist, die folgenden Schritte auszuführen:
Bereitstellen von Produktinformationen (110) zu einem Produkt (112), wobei die Produktinformationen Bilddaten (114) und/oder Videodaten, Textdaten (116) und/oder numerische Daten (118) und/oder Audiodaten aufweisen;
Durchführen einer automatisierten Suche auf der Online-Handelsplattform (108) nach einer potenziellen Produktnachahmung (106) mittels eines ersten maschinellen Lernmodells (120) unter Verwendung der bereitgestellten Produktinformationen (110);
Validieren der potenziellen Produktnachahmung (106) auf Basis einer vorbestimmten, priorisierten Produktinformation (114, 116, 118) der bereitgestellten Produktinformationen (110) zum Ermitteln einer tatsächlichen Produktnachahmung (122); und
Erzeugen einer Ausgabedatei (124) zu der tatsächlichen Produktnachahmung (122) unter Verwendung von Informationen (126) zu der tatsächlichen Produktnachahmung (122) und der bereitgestellten Produktinformationen (110) durch ein zweites maschinelles Lernmodell (123).

## Geänderte Patentansprüche

### Geänderte Patentansprüche gemäss Regel 137(2) EPÜ.

1. Verfahren zur Erkennung einer Produktnachahmung (106) auf einer Online-Handelsplattform (108), das Verfahren umfassend die Schritte:
Bereitstellen (S1) von Produktinformationen (110) zu einem Produkt (112), wobei die Produktinformationen (110) Bilddaten (114) und/oder Videodaten, Textdaten (116) und/oder numerische Daten (118) und/oder Audiodaten aufweisen;
Durchführen (S2) einer automatisierten Suche auf der Online-Handelsplattform (108) nach einer potenziellen Produktnachahmung (106) mittels eines ersten maschinellen Lemmodells (120) unter Verwendung der bereitgestellten Produktinformationen (110);
Validieren (S3) der potenziellen Produktnachahmung (106) auf Basis einer vorbestimmten, priorisierten Produktinformation (114, 116, 118) der bereitgestellten Produktinformationen (110) unter Verwendung eines Confidence-Scores zum Ermitteln einer tatsächlichen Produktnachahmung (122); und
Erzeugen (S4) einer Ausgabedatei (124) zu der tatsächlichen Produktnachahmung (122) unter Verwendung von Informationen (126) zu der tatsächlichen Produktnachahmung (122) und der bereitgestellten Produktinformationen (110) durch ein zweites maschinelles Lernmodell (123).

2. Verfahren nach Anspruch 1, wobei das Durchführen (S2) der automatisierten Suche ein Extrahieren von Merkmalen des Produktes (112) aus den bereitgestellten Produktinformationen (110), ein Vergleichen der extrahierten Merkmale mit jeweiligen Produktmerkmalen einer Vielzahl von Produkten der Handelsplattform (108), und ein Ermitteln der potenziellen Produktnachahmung (106) auf Basis des Vergleichs aufweist.

3. Verfahren nach Anspruch 1 oder 2, wobei das Validieren (S3) der potenziellen Produktnachahmung (106) ein Ermitteln eines Ähnlichkeitsgrades zwischen dem Produkt (112) und der potenziellen Produktnachahmung (106) aufweist, und wobei das Erzeugen der Ausgabedatei (124) in Abhängigkeit des Ähnlichkeitsgrades erfolgt, und wobei die Ausgabedatei (124) Textdaten (116) und/oder Bilddaten (114) zu dem Produkt (112) und der tatsächlichen Produktnachahmung (122) aufweist.

4. Verfahren nach einem der vorhergehenden Ansprüche, wobei das erste maschinelle Lemmodell (120) und das zweite maschinelle Lemmodell (123) in einem multimodalen maschinellen Lernmodell umfasst sind, oder wobei das erste maschinelle Lernmodell (120) ein Agentenmodell aufweist und das zweite maschinelle Lemmodell (123) ein Agentenmodell aufweist, wobei die Agentenmodelle kommunikativ gekoppelt sind.

5. Verfahren nach einem der vorhergehenden Ansprüche, wobei die Informationen (126) zu der tatsächlichen Produktnachahmung (122) Anbieter- und/oder Kontaktinformationen umfassen, die aus der Online-Handelsplattform (108) durch Web-Scraping und/oder durch Nutzung einer API-Schnittstelle ermittelt werden.

6. Verfahren nach einem der vorhergehenden Ansprüche, wobei das Erzeugen (S4) einer Ausgabedatei (124) ein automatisiertes Generieren eines rechtlichen Dokuments, umfassend eine Berechtigungsanfrage und/oder eine Abmahnung und/oder eine Schadensersatzaufforderung aufweist.

7. Verfahren nach einem der vorhergehenden Ansprüche, wobei die Ausgabedatei (124) über eine Schnittstelle (128) einer Zollbehörde bereitgestellt wird, um insbesondere automatisiert ein Beschlagnahmungsverfahren einzuleiten.

8. Verfahren nach einem der vorhergehenden Ansprüche, wobei die potenzielle Produktnachahmung (106) zur Validierung über eine Schnittstelle (130) an eine Infrastruktur eines Rechtsexperten bereitgestellt wird, und wobei das Erzeugen einer Ausgabedatei (124) unter Verwendung von Informationen zu dem Rechtsexperten, die mittels der Infrastruktur extrahierbar sind, erfolgt.

9. Verfahren nach einem der vorhergehenden Ansprüche, wobei das Durchführen (S2) einer automatisierten Suche kontinuierlich und vorzugsweise in Echtzeit erfolgt.

10. Verfahren nach einem der vorhergehenden Ansprüche, wobei mindestens das erste maschinelle Lemmodell (120) auf Basis von validierten tatsächlichen Produktnachahmungen (122) trainiert wird.

11. Verfahren nach einem der vorhergehenden Ansprüche, wobei die bereitgestellten Produktinformationen (110) in einer zentralen Datenbank zum strukturierten Abfragen von Merkmalen des Produktes (112) gespeichert werden.

12. Computerprogrammprodukt, das auf einem computerlesbaren Medium gespeichert ist und Programmcode umfasst, der, wenn er auf einem Computer ausgeführt wird, den Computer dazu veranlasst, die Schritte eines Verfahrens gemäß einem der Ansprüche 1 bis 11 auszuführen.

13. Computerlesbarer Datenträger, auf dem das Computerprogrammprodukt nach Anspruch 12 gespeichert ist.

14. Vorrichtung (100) zur Erkennung einer Produktnachahmung (106) auf einer Online-Handelsplattform (108), wobei die Vorrichtung (100) eine Recheneinrichtung (102) aufweist, die dazu ausgebildet ist, die folgenden Schritte auszuführen:
Bereitstellen von Produktinformationen (110) zu einem Produkt (112), wobei die Produktinformationen Bilddaten (114) und/oder Videodaten, Textdaten (116) und/oder numerische Daten (118) und/oder Audiodaten aufweisen;
Durchführen einer automatisierten Suche auf der Online-Handelsplattform (108) nach einer potenziellen Produktnachahmung (106) mittels eines ersten maschinellen Lemmodells (120) unter Verwendung der bereitgestellten Produktinformationen (110);
Validieren der potenziellen Produktnachahmung (106) auf Basis einer vorbestimmten, priorisierten Produktinformation (114, 116, 118) der bereitgestellten Produktinformationen (110) unter Verwendung eines Confidence-Scores zum Ermitteln einer tatsächlichen Produktnachahmung (122); und
Erzeugen einer Ausgabedatei (124) zu der tatsächlichen Produktnachahmung (122) unter Verwendung von Informationen (126) zu der tatsächlichen Produktnachahmung (122) und der bereitgestellten Produktinformationen (110) durch ein zweites maschinelles Lernmodell (123).
